# EUROPEAN PATENT APPLICATION

(11) **EP 2 394 517 A1**
(43) Date of publication of application: **14.12.2011**
(21) Application number: 11169252.1
(22) Date of filing: 09.06.2011
(51) Int. Cl.: A23L 1/0526, A23G 9/44, A23G 9/52

(54) **Process to prepare a semifinished product to be whisked and semifinished product obtained therefrom for ice cream or water ice production**

(30) Priority: 09.06.2010 IT MI20101018; 09.06.2010 SM 201000069
(71) Applicant: Di Noto, Pietro Antonio, 98079 Castel di Tusa (ME) (IT)
(72) Inventor: Di Noto, Pietro Antonio, 98079 Castel di Tusa (ME) (IT)
(74) Representative: Mittler, Enrico

(57) **Abstract**

A process to prepare a pasteurized, homogenized semifinished product to be whisked, comprising the steps of: 1) mixing, singularly in a dry, sterilized container and then to one another, the ingredients of a mixture for ice-cream or for water-ice, 2) pasteurizing the mixture from step 1) at 85°C, 3) homogenizing and cooling the mixture from step 2) to +4°C, 4) allowing the homogeneous mixture from 3) to ripen and stand in a ripening tub, for a time between 10 and 15 hours at a temperature of +4°C, and 5) storing the semifinished product thus obtained at +4°C, and semifinished products obtained therefrom for use to rapidly prepare ice-cream or water ice.

## Description

The present invention relates to a process for preparing a semifinished product to be whisked, and to a semifinished product obtained therefrom.

More particularly, the present invention relates to a process for preparing a semifinished product ready to be whisked so as to rapidly prepare ice-cream or water-ice.

The ice-cream of traditional type is known to be essentially made of milk, sugar, water and flavourings.

From the chemical-physical point of view, ice-cream is a gas-liquid-solid emulsion consisting of a mixture of soluble and insoluble liquid and solid ingredients taken to pasty state by cooling and incorporating air.

The ice-cream of traditional type is also known to be prepared by means of a long, laborious process that requires the presence of specialized operators and a series of expensive machineries, such as for example a homogenizer, a pasteurizer, a chiller, a churner and refrigerated storage cells.

Indeed, the traditional process to make ice-cream essentially comprises the steps disclosed below.

A first step of mixing the ingredients, which allows the complete solubilization of all water soluble solids and the dispersion of insoluble solids. This step is carried out under stirring, typically at a temperature of 40°C.

A second step, named homogenization, is used to take the size of the fat globules to values of about 2 µm and to uniformly disperse them in the mass in the form of a fine, soluble emulsion. This step is typically carried out at 200 atm.

A third step, named pasteurization, in which a thermal treatment is carried out to abate the pathogen bacterial feed; is typically carried out at 80°C for 30 seconds.

A fourth step of ripening is used to uniform the mixture composition from the chemical-physical point of view, so that it is perfectly homogenous in sensorial terms. Ripening is obtained by allowing the mixture to stand at a temperature of 3-5°C for a variable time from 5 to 24 hours, typically from 4 to 6 hours.

A fifth step, named whisking, in which the ice-cream is physically made, consists in taking the mixture from +5 to -5°C, thus obtaining its solidification.

A sixth step, named hardening, confers stability to the ice-cream over time. It consists in transiting the ice-cream through ventilated cold air tunnels, which may reach temperatures of -2/-35°C according to the features of the recipes.

A seventh step of packaging is used to introduce the ice-creams, already contained in their primary packaging, into boxes. The ice-cream should maintain a temperature of -20°C during this step.

Finally, there are the storage and distribution steps, in which the ice-cream which has just left the production line is not a perfectly stable structure and thus is stored in a cold cell at -20/-25°C for at least 12 hours. Storage and distribution should be an integrated system with sales, in order to ensure cold chain continuity and avoid the product from loosing its organoleptic, hygienic features.

From the above, it is apparent that the traditional method of making ice-cream is long and laborious, requiring expert personnel and the availability of expensive equipments.

Furthermore, the aforesaid several steps of making traditional ice-cream require particular care with regards to hygiene and homogeneousness of the final desired product.

Therefore, there is the need to have an ice-cream making process which is rapid and not expensive, while allowing an ice-cream provided with the required organoleptic properties and with a homogenous appearance to be obtained.

For this purpose, ice-cream making processes which use the so-called semifinished powdered products are used.

However, the ice-cream production from the aforesaid semifinished products only eliminates the first step of mixing the ingredients.

Indeed, in order to obtain the ice-cream from a semifinished powdered product, such as those currently marketed, the following steps are at least required: a) adding other ingredients to the semifinished powdered product, such as for example sugar, flavours and milk; b) homogenizing and pasteurizing the obtained mixture; c) whisking; and d) storing the final obtained product.

US-4282262 and WO-2009/000712 describe some ice-cream making processes.

Therefore, the technical problem underlying the present invention is to provide a process which allows the quick preparation of ice-cream or water-ice, which is rapid, safe from the hygienic point of view and not expensive in terms of manpower and equipments needed, while allowing an ice-cream or water-ice of homogenous consistency provided with the desired organoleptic features to be obtained.

Now, it was surprisingly found that such a problem is solved by a process to prepare a pasteurized, homogenized semifinished product to be whisked, comprising the steps of: 1) mixing, singularly in a dry and sterilized container and then one another, the ingredients of a mixture for ice-cream or water-ice, 2) pasteurizing the mixture from step 1) at 85°C, 3) homogenizing and cooling the mixture from step 2) to +4°C, 4) letting the homogeneous mixture from step 3) ripen and stand in a ripening tub, for a time between 10 and 15 hours at a temperature of +4°C, and 5) storing the semifinished product obtained at +4°C.

In order to obtain a semifinished product for cream ice-cream, the following ingredients are advantageously mixed in step 1) of the process of the present invention: a) from 4,5 to 6,5% by weight of a base mixture for cream ice-cream essentially consisting of dextrose from 30 to 35% by weight, sodium caseinate from 3 to 4% by weight, sodium methyl cellulose from 1 to 2% by weight, skimmed powdered milk from 2 to 3% by weight, guar gum from 0,5 to 1% by weight, carob seed flour from 0,5 to 1,5% by weight, sodium chloride from 0,01 to 0,015% by weight, hydrogenated coconut fat from 15 to 20% by weight, whipping agent from 32 to 36% by weight, mono- and diglycerides of fatty acids from 4 and 5% by weight and plain ice cream flavour from 0,15 to 0,25% by weight, with b) milk from 52 to 62% by weight, sucrose from 23 to 29% by weight, dextrose from 2,5 to 3,5% by weight, and a flavouring paste from 6 to 8% by weight.

In order to obtain a semifinished product for fruit ice-cream, the following ingredients are advantageously mixed in step 1) of the process of the present invention: a) from 40 to 60% by weight of a base mixture for fruit ice-cream essentially consisting of sucrose from 40 to 50% by weight, guar gum from 0,1 to 0,2% by weight, carob seed flour from 0,4 to 0,6% by weight and pasteurized water from 50 to 60% by weight with b) flavouring fruit pulp from 40 to 60% by weight.

In order to obtain a semifinished product for water-ice, in step 1) water from 40 to 60% by weight, sucrose from 10 to 30% by weight and fruit pulp from 20 to 40% by weight are advantageously mixed.

The pasteurized, homogenized semifinished product obtained by means of the process of the present invention is new, and thus form another object of the invention.

The aforesaid pasteurized, homogenized semifinished product to be whisked of the present invention is chosen from the group consisting of semifinished product for cream ice-cream, semifinished product for fruit ice-cream, and semifinished product for water-ice.

The semifinished product of the present invention advantageously consists of a mixture for cream ice-cream comprising guar gum and carob seed flour in a weight ratio between 1:1,21 and 1:1,26, and with a density between 24 and 27 degrees Baumè.

The semifinished product of the present invention preferably consists of a mixture for fruit ice-cream comprising guar gum and carob seed flour in a weight ratio between 1:3 and 1:4, even more preferably in a weight ratio of 1:3,5, and with a density between 18 and 20 degrees Baumè.

After long experimentation, the Applicant has found that the co-presence of guar gum and carob seed flour in the particular weight ratios indicated above allows to provide the pasteurized, homogenized semifinished product of the invention with a particular stability at the temperature of a traditional refrigerator, i.e, about + 4°C, in order to maintain said semifinished product in the homogenous semi-liquid form, while preserving its organoleptic features.

Furthermore, the Applicant has found that the co-presence of the guar gum and carob seed flour in the particular weight ratios indicated above is capable of providing a density which is particularly suited for the subsequent whisking step to the semifinished product of the present invention.

In a preferred embodiment, the mixture for cream ice-cream in the semifinished product of the present invention comprises a base mixture for cream ice-cream essentially consisting of dextrose, sodium caseinate, sodium methyl cellulose, skimmed powdered milk, guar gum, carob seed flour, sodium chloride, hydrogenated coconut fat, whipping agent, mono- and diglycerides of fatty acids and plain ice-cream flavour.

A preferred example of said base mixture for cream ice-cream of the semifinished product of the present invention essentially consists of dextrose from 30 to 35% by weight, sodium caseinate from 3 to 4% by weight, sodium methyl cellulose from 1 to 2% by weight, skimmed powdered milk from 2 to 3% by weight, guar gum from 0,5 and 1% by weight, carob seed flour from 0,5 and 1,5% by weight, sodium chloride from 0,01 to 0,015% by weight, hydrogenated coconut fat from 15 to 20% by weight, whipping agent from 32 to 36% by weight, mono- and diglycerides of fatty acids from 4 to 5% by weight, and plain ice cream flavour from 0,15 to 0,25% in weight.

Said base mixture for cream ice-cream is new, and thus forms a further object of the present invention.

A preferred example of whipping agent used in the base mixture for cream or fruit ice-cream of the present invention comprises hydrogenated vegetable grease, skimmed powdered milk, acetal esters of mono- and diglycerides of fatty acids, glucose syrup powder, and sugar. Such a whipping agent is advantageously sold by Cognis Deutscheland GmbH & Co. KG under the name LAMEQUICK® ME 1.

The whipping agent preferably comprises 3-7% by weight of vegetable fat ("A bland" type refined olive oil), 45-55% by weight of skimmed powdered milk, 15-25% by weight of glucose syrup, 15-25% by weight of brown sugar, and 3-7% by weight of almond flour.

Even more preferably, the whipping agent comprises 5% by weight of vegetable fat ("A bland" type refined olive oil), 50% by weight of skimmed powdered milk, 20% by weight of glucose syrup, 20% by weight of brown sugar, and 5% by weight of almond flour.

Each constituent element of the mixture provides an essential technical contribution to obtain a semifinished product which is satisfactory in accordance with the object of the invention. The contribution of each component will be listed below.

The "bland" type refined olive oil is a very particular type of olive oil. It is made of Lampante type olive oil, refined by means of a physical process in refinery, and turned white and odorless; it contains zero degree acidity and is a low oxidation oil, i.e. it contains no peroxides and is a natural, non-hydrogenated product. This oil specifically made in this manner for our use and added in the right doses in the liquid mixture, contributes vegetable fat which is easily digestible by our body, and makes the ice-cream spreadable and velvety after production, without any odor or greasiness being detected in the ice-cream. It is an ingredient which excellently replaces notorious hydrogenated fats and is absolutely non comparable in terms of benefits for the human body.

Almond flour makes the mixture tasty while contributing high-quality fats to the recipe.

High-quality, skimmed powdered milk provides the ice-cream with texture, consistency and the right fats.

In addition to sweetening, the brown sugar also consolidates our mixture.

Glucose syrup is made of pasteurized water sweetened with sucrose. This particular process, using water as if it were distilled, gives a very sweet taste to the mixture, and the water is so sterilized; this makes the mixture even safer from the hygienic and health point of view.

Cow's milk is the main base of cream mixture, such as hazelnut, pistachio, cream, plain and other flavours, except for fruit for which water, not milk, is needed. Milk makes the mixture unique in its kind, by adding natural fats and the very many beneficial properties that cow's milk possesses. Furthermore, once the ice-cream has been made, it confers it a very particular creaminess and a unique color and flavour to the ice-cream, and that mouth greasiness is not perceived when eating the ice-cream. These particularities can only be obtained using cow's milk. Otherwise, all these benefits may not arise from an ice-cream made using milk flour or concentrate. Obviously, using cow's milk is much simpler because our base mixture is suitable for making a complete, liquid ice-cream, unlike the other bases which are marketed and which are in the powder form, and thus must use milk flours when constructing their ice-cream making bases.

Carob seed flour is a very high viscosity product and may absorb up to 40% of water. It is therefore an excellent thickener, stabilizer and emulsifier. It is one of the main ingredients of hand-made ice-cream, and is used to avoid large ice crystals from being formed and to make the ice-cream creamier and thicker.

Guar seed flour, more correctly named "guar gum", is used as an additive with thickening function and a minimum, indispensable correct amount thereof is added to the mixture.

Dextrose monohydrate: in the mixture, according to the correct doses, it increases the antifreeze power of the mixture and decreases the sweetness degree of the ice-cream made.

Sodium caseinate: medium viscosity casein sodium salt, obtained by acid precipitation of pasteurized, spray-dried fresh milk; it is used to make the mixture more soluble.

Sucrose esters: fatty acids derived from palm oil. It is one of the food additives allowed in EU to be used as an emulsifier and stabilizer for oil/water/milk emulsions, and is used in predetermined, balanced amounts in the mixture along with the other ingredients to obtain a better emulsion.

E 466: Carboxymethylcellulose: this is a thickener and a gel as well; it is used in the mixture to eliminate possible air bubbles when making the ice-cream from the liquid mixture.

Sodium chloride: especially used for enhancing flavours.

E 471: this is a mono- and diglyceride of fatty acids; it is an allowed emulsifier. Its use is not detrimental to the liver or other organs. It may be decomposed as fatty acid. It is used to bind powdered substances to liquid or fatty substances thus avoiding greasier substances contained in the mixture from separating from less greasy substances when mixing the products.

E 472a: this is an acetic ester of mono- and diglyceride of fatty acids, another emulsifier which combined with E471 helps to bind less greasy fatty substances to one another.

Natural flavours: these are natural flavours, different from one another according to the taste of the mixture. They may be natural paste concentrates, e.g. hazelnut or pistachio for creams, or fruit concentrates, such as strawberry, banana or raspberry. They are cold extracted and concentrated. They are used to enhance and fortify the taste of the flavour for each single mixture. The doses vary according to the flavour.

The semifinished ice-cream product of the present invention consists of the aforesaid base for cream ice-cream according to the present invention from 4,5 to 6,5% by weight, milk from 52 to 62% by weight, sucrose from 23 to 29% by weight, dextrose from 2,5 to 3,5% by weight and a flavouring paste from 6 to 8% by weight.

Examples of pastes suitable for flavouring the cream ice-cream of the present invention are a paste made of pistachios from Bronte (Catania, Italy) and a paste made of hazelnuts from Alba (Cuneo, Italy).

In a further preferred embodiment, the mixture for fruit ice-cream of the semifinished product of the present invention comprises a base mixture for fruit ice-cream that essentially consists of sucrose, dextrose, guar gum, carob seed flour and pasteurized water.

A preferred example of said base mixture for fruit ice-cream of the semifinished product of the present invention essentially consists of sucrose from 40 to 50% by weight, guar gum from 0,1 to 0,2% by weight, carob seed flour from 0,4 to 0,6% by weight, and pasteurized water from 50 to 60% by weight.

Said base mixture for fruit ice-cream is new, and thus forms a further object of the present invention.

The semifinished product for fruit ice-cream of the present invention consists of the base mixture for fruit ice-cream of the present invention from 40 to 60% by weight and a flavouring fruit pulp from 40 to 60% by weight.

Examples of fruit pulp suitable for flavouring the base mixture for fruit ice-cream of the present invention are 100% natural concentrated pulp of mulberry, strawberry and lemon.

In use, to prepare an ice-cream or water-ice starting from a semifinished product of the present invention, the latter is simply inserted as such in a traditional type churner and whisked for a short time, e.g. about 15 minutes.

It is thus a further object of the present invention a process for making ice-cream or water-ice comprising the step of whisking the semifinished product of the present invention over a period of time from 10 to 20 minutes.

From the above, the advantages of the process for preparing a semifinished product to be whisked of the present invention, and of the semifinished product obtained therefrom are immediately apparent.

A first advantage is that the semifinished product obtained from the process of the present invention allows the steps of mixing, homogenizing and pasteurizing of the traditional ice-cream making process to be eliminated, and therefore the costs of the corresponding equipments to be suppressed.

A second advantage is that the semifinished product obtained from the process of the present invention can be used by anyone without requiring specialized manpower.

A third advantage is that the process of the present invention allows the ice-cream or water-ice to be rapidly obtained (about 15 minutes), having the desired organoleptic features and a homogenous consistency.

A fourth advantage is that the process of the present invention allows a semifinished product to be obtained having ensured hygiene and organoleptic features and appearance which are always the same.

A fifth advantage is that the semifinished product of the present invention may be stored at -25°C to be transported over long hauls and stored at that temperature for at least 6 months from the date of production.

A sixth advantage is that the semifinished product of the present invention has a particular density which is suitable for its rapid whisking.

A seventh advantage is that the semifinished product of the present invention may be stored in any type of container, such as for example a glass or PET vessel.

A further advantages is that the appearance of the semifinished product of the present invention is always homogenous.

The following examples are provided to illustrate the present invention without limiting it in no way.

### Example 1

### Preparation of the semifinished product for pistachio-flavoured cream ice-cream of the invention

### Base mixture for cream ice-cream

| **Ingredient** | **Quantity (kg)** |
|---|---|
| Dextrose | 22,134 |
| Sodium caseinate | 2,300 |
| Sodium methyl cellulose E466 | 1,050 |
| Skimmed powdered milk | 1,750 |
| Guar gum | 0,483 |
| Carob seed flour | 0,588 |
| Sodium chloride | 0,00657 |
| Hydrogenated coconut fat | 11,200 |
| Whipping agent | 22,610 |
| Mono- and diglycerides of fatty acids | 3,00 |
| Plain milk flavor | 0,140 |

65,26 kg of base mixture for cream ice-cream according to the present invention was thus obtained.

For the production of the semifinished product of the present invention, the following ingredients were added to 500 grams of the aforesaid base mixture for cream ice-cream: UHT milk (5 liters), sucrose (2,250 kg), dextrose 39 DE (250 grams) and pistachio paste made of pistachios from Bronte (Catania, Italy) (600 grams). The aforesaid single ingredients were firstly mixed singularly in a dry, sterile container and then to one another. The obtained mixture was then pasteurized at 85°C in a pasteurizer of the traditional type and immediately passed through specific steel tubes to be pumped into the homogenizer, where it was also cooled to +4°C. The homogenous mixture was then left to ripen and stand at +4°C for 12 hours in a ripening tub. At the end, without temperature drops, the mixture was put into the definitive container chosen and the product was chilled to -18°C for up to 2 hours. Finally, the semifinished product was stored in a refrigerator of traditional type at +4°C.

The semifinished product thus obtained had a homogenous appearance, a density of 25 degrees Baumè and a 6 month stability in the form of semi-liquid product stored in a traditional refrigerator at a temperature of + 4°C.

### Example 2

### Preparation of the semifinished product for strawberry-flavoured fruit ice-cream of the invention

### Base mixture for fruit ice-cream

| **Ingredient** | **Quantity** |
|---|---|
| Pasteurized water at 80°C | 80 liters |
| Sucrose | 66 kg |
| Guar gum | 200 grams |
| Carob seed flour | 700 grams |

120 kg of base mixture for fruit ice-cream according to the present invention was thus obtained.

For the production of the semifinished product of the present invention 100% strawberry pulp was added (100 grams) to 100 grams of the aforesaid base mixture for fruit ice-cream of the present invention. The aforesaid single ingredients were firstly mixed singularly in a dry, sterile container and then to one another. The obtained mixture was then pasteurized at 85°C in a pasteurizer of traditional type and immediately passed through specific steel tubes to be pumped into the homogenizer, where it was also cooled to +4°C. The homogenous mixture was then left to ripe and stand at +4°C for 12 hours in a ripening tub. At the end, without temperature drops, the mixture was put into the definitive container chosen and the product was chilled to -18°C for up to 2 hours. Finally, the semifinished product was stored in a refrigerator of traditional type at +4°C.

The semifinished product thus obtained had a homogenous appearance, a density of 19 degrees Baumè and a 6 month stability in the form of semi-liquid product stored in a traditional refrigerator at a temperature of + 4°C.

### Example 3

### Preparation of the semifinished product for strawberry-flavoured water-ice of the invention

| **Ingredient** | **Quantity** |
|---|---|
| Pasteurized water at 80°C | 5 liters |
| Sucrose | 2 kg |
| Strawberry pulp | 3 liters |

10 kg of base mixture for fruit water-ice according to the present invention was thus obtained.

For the production of the semifinished product of the present invention, the single ingredients were mixed and the obtained mixture was pasteurized at 85°C in a pasteurizer of traditional type and immediately passed through specific steel tubes to be pumped into the homogenizer, where it was also cooled to +4°C. The homogenous mixture was then left to ripen and stand at +4°C for 12 hours in a ripening tub. At the end, without temperature drops, the mixture was put into the definitive container chosen and the product was chilled to -18°C for up to 2 hours. Finally, the semifinished product was stored in a refrigerator of traditional type at +4°C.

The mixture for obtaining the claimed semifinished product, of which three specific embodiments have been described, has the following advantages over the prior art.
- It can be defined as a complete liquid ice-cream which is "deep-frozen without addition of additives or preservatives". It is well known that the ice-cream is not considered a deep-frozen product, and therefore, in this case, the complete liquid ice-cream mixture is the first to be deep-frozen. This means that this deep-frozen ice-cream mixture maintains all the chemical and organoleptic features of the initial products which, when whisked, will become ice-cream.
- It is an entirely homogenized, deep-frozen natural product, both for the fruit and the cream mixture. Therefore, the flavour is one and compact, and when stored under a display window at a temperature of -16 degrees centigrade, the ingredients never separate from one another, and even if the display window looses temperature due to a malfunction that often occurs, the ice-cream made using the mixture remains intact with just its flavour.
- Both fruit and cream ice-cream mixture is susceptible to assimilate 35% of air (Ove Run) during the step of whisking.
- It is also suitable for preparing ice-cream in continuous machines, by blowing forced air to 80% of the product, thus always maintaining an excellent taste, and especially maintaining the "dry" texture of the ice-cream following the production.
- 1,3 kg of product are made by using one liter of mixture (absorbing air).
- It is suitable for absorbing any extra amount of paste or fruit when the flavour is to be enhanced without varying the texture of the ice-cream.
- The ice-cream made using this mixture is always spreadable to temperatures of -17 degrees centigrade to be served in cones or cups and it does not harden.
- The color of the ice-cream made and its perfume and flavour are the same as that of the raw matter made in Sicily, even if the ice-cream is made anywhere in the world by using this mixture; with this mixing system, the flavour of the ice-cream will remain integral and intact with regards to the original taste, because there is no addition of any product that can alter the flavour of the ice-cream. For example, by varying according to the place of origin, the water would affect the flavour of the ice-cream. Similarly, the amount of milk and sugar used would vary according to the manufacturer.

## Claims

1. Process to prepare a semifinished product pasteurized and homogenized to be whisked, comprising the steps of: 1) mixing, singularly in a dry and sterilized container and then to one another, the ingredients of a mix for ice-cream or for water-ice, 2) pasteurizing at 85°C the mix obtained at 1), 3) homogenizing and cooling at +4°C the mix obtained in 2), 4) letting the homogeneous mix obtained in 3) ripen and stand in a ripening tub, for a time between 10 and 15 hours at a temperature of +4°C, and 5) preserving the semifinished product obtained at +4°C.

2. Process according to claim 1, wherein in step 1) are mixed a) between 4,5 and 6,5% by weight of a base mix for cream ice-cream consisting essentially of dextrose in quantity between 30 and 35% by weight, sodium caseinate in quantity between 3 and 4% by weight, sodium methyl cellulose in quantity between 1 and 2% by weight, skimmed powdered milk in quantity between 2 and 3% by weight, guar gum in quantity between 0,5 and 1% by weight, carob seed flour in quantity between 0,5 and 1,5% by weight, sodium chloride in quantity between 0,01 and 0,015% by weight, hydrogenated coconut fat in quantity between 15 and 20% by weight, whipping agent in quantity between 32 and 36% by weight, mono- and diglycerides of fatty acids in quantity between 4 and 5% by weight and plain ice cream flavour in quantity between 0,15 and 0,25% by weight, with b) milk in quantity between 52 and 62% by weight, sucrose in quantity between 23 and 29% by weight, dextrose between 2,5 and 3,5% by weight, and a flavouring paste between 6 and 8% by weight.

3. Process according to claim 1, wherein in step 1) are mixed a) between 40 and 60% by weight of a base mix for fruit ice-cream consisting essentially of sucrose in quantity between 40 and 50% by weight, guar gum in quantity between 0,1 and 0,2% by weight, carob seed flour in quantity between 0,4 and 0,6% by weight and pasteurized water in quantity between 50 and 60% by weight with b) fruit pulp providing taste in quantity between 40 and 60% by weight.

4. Process according to claim 1, wherein in step 1) water between 40 and 60%, sucrose between 10 and 30% by weight and fruit pulp between 20 and 40% by weight are mixed.

5. Semifinished product pasteurized and homogenized to be whisked obtained from the process as described in claims from 1 to 4.

6. Semifinished product pasteurized and homogenized to be whisked according to claim 5, wherein said semifinished product to be whisked is chosen from the group consisting of semifinished product for cream ice-crem, semifinished product for fruit ice-cream and semifinished product for water-ice.

7. Semifinished product pasteurized and homogenized to be whisked according to claim 6, wherein said semifinished product for cream ice-crem comprises guar gum and carob seed flour by weight ratio between 1:1,21 and 1:1,26 and with a density comprised between 24 and 27 Baumè degrees.

8. Semifinished product according to claim 7, wherein the mix for cream ice-cream is made of a base mix for cream ice-cream consisting essentially of dextrose in quantity between 30 and 35% by weight, sodium caseinate in quantity between 3 and 4% by weight, sodium methyl cellulose in quantity between 1 and 2% by weight, skimmed powdered milk in quantity between 2 and 3% by weight, guar gum in quantity between 0,5 and 1% by weight, carob seed flour in quantity between 0,5 and 1,5% by weight, sodium chloride in quantity between 0,01 and 0,015% by weight, hydrogenated coconut fat in quantity between 15 and 20% by weight, whipping agent in quantity between 32 and 36% by weight, mono- and diglycerides of fatty acids in quantity between 4 and 5% by weight and plain ice cream flavour in quantity between 0,15 and 0,25% by weight.

9. Semifinished product pasteurized and homogenized to be whisked according to claim 6, wherein said semifinished product for fruit ice-cream comprises guar gum and carob seed flour by weight ratio between 1:3 and 1:4 and with a density comprised between 18 and 20 Baumè degrees.

10. Semifinished product according to claim 9, wherein the mix for fruit ice-cream is made of a base mix for fruit ice-cream consisting essentially of sucrose in quantity between 40 and 50% by weight, guar gum in quantity between 0,1 and 0,2% by weight, carob seed flour in quantity between 0,4 and 0,6% by weight and pasteurized water in quantity between 50 and 60% by weight.
